Europäisches Patentamt

**European Patent Office**

Office européen des brevets

(19)

(11) Publication number: **0 228 351**
**B1**

(12) EUROPEAN PATENT SPECIFICATION

(45) Date of publication of the patent specification:
20.12.89

(51) Int. Cl.⁴: **B65G 47/84,** B65B 31/02

(21) Application number: **86830371.0**

(22) Date of filing: **12.12.86**

(54) **Star conveyor wheel for the transfer of cylindrical containers into and out of a pressure vessel housing equipment by which the containers are vacuum sealed.**

(30) Priority: **19.12.85 IT 4013485**

(43) Date of publication of application:
**08.07.87 Bulletin 87/28**

(45) Publication of the grant of the patent:
**20.12.89 Bulletin 89/51**

(84) Designated Contracting States:
**BE CH DE ES LI**

(56) References cited:
**FR-A- 932 010**
**US-A- 2 760 702**

(73) Proprietor: **MANZINI COMACO S.P.A., Via
Paradigna, 88/A, I-43100 Parma(IT)**

(72) Inventor: **Dall'Argine, Franco, Via Spezia, 77,
I-43100 Parma(IT)**

(74) Representative: **Lanzoni, Luciano, c/o BUGNION S.p.A.
Viale Trento Trieste, 25, I-41100 Modena(IT)**

ACTORUM AG

## Description

The invention relates to a star conveyor wheel for the transfer of cylindrical containers into and out of a pressure vessel housing equipment by which the containers are vacuum sealed.

The prior art in this field embraces systems for sealing cylindrical containers (cans), wherein the sealed material may be tin, aluminium or plastic. The filled can is sealed by seam-folding one of its two bases (in effect, the lid) to the lip of the cylindrical container, using seam-folding machinery of the conventional type.

Where the filled cans are to be sealed in a vacuum, the seam-folding machine is located internally of a large vessel embodied in such a way as to create an airtight chamber, inside which negative pressure is maintained.

Containers are conveyed into and out of the vacuum chamber by a star wheel provided with a plurality of recesses, each one of which fully accommodates one container.

The star wheel is rotatable about its own vertical axis, and slides to an exact fit in a slot which passes through one of the vessel walls; the cross section of the slot and the axial section of the star wheel are identical, and the depth of the slot is greater than the diameter of a single recess of the star wheel.

The embodiment of the star wheel must be such as to ensure transfer of the container at high speed onto a further conveyor, once inside the pressure vessel. Whatever the design of internal conveyor employed, e.g. a belt, or another star wheel, transfer of the container from one to the other must occur at high speed both when entering and when leaving the vacuum chamber.

It has been found that conventional types of star wheel, as that shown in the US Patent 2 760 702, cannot guarantee smooth passage from the one conveyor to the other at high production tempos. Accordingly, the object of the invention is that of guaranteeing smooth transfer of containers from one star conveyor wheel to another at high speed while maintaining an efficient airtight seal and ensuring that there is no loss of negative pressure from the vessel housing the seam-folding unit.

The stated object and others besides are realized with a star wheel as disclosed herein, which serves to transfer cylindrical containers into and out of a pressure vessel housing equipment for vacuum sealing of such containers.

For the transfer of cylindrical containers into and out of a pressure vessel housing equipment by which the containers are vacuum sealed, the star conveyor wheel comprising a drum having two circular end flanges joined together at their centres by a shaft and at their peripheries by arcuate sections, recesses being formed between the peripheral arcuate sections by recessing radially inwardly the flanges between the peripheral arcuate sections, the recesses serving to accommodate the single containers, the star wheel being driven rotationally around the shaft axis, and further comprising a plurality of ejection means of which is slidable in the radial direction across a respective recess to an extended position where its outermost end is at the outer periphery of the recess; cam control means having a circular plate fixed to the frame of the container sealing equipment, by which control means each of said ejection means are operated both during entry and during exit of the container into and out of the pressure vessel; is characterized in that in its radially innermost position the ejection means is located radially inwards of the recess; and in that each of the ejection means comprises a bush which is slidable along a radial slot located in the bottom face of the hollow face of the hollow body and coinciding with the recess, and accommodates the axially slidable pivot of a spring-loaded cam follower urged into contact with the cam control means; and in that the cam control plate exhibits two contoured channels of rectangular cross section which are alternately distanced from and redirected toward the centre of the plate and occupy diametrically opposed positions thereon, one located inside the pressure vessel and the other outside, and wherein the two contoured channels are engaged by the spring-loaded cam followers of the ejection means and wherein each of the contoured channels exhibits two terminal gradients providing continuity between the top surface of the plate and the bottom of the channel, the top surface of the plate being directly adjacent the lower end flange so as to permit no intercommunication between the said channels.

The invention will now be described in detail, by way of example, with the aid of the accompanying drawings, in which:

fig. 1 is a plan view of the star conveyor wheel disclosed in which certain parts are cut away so as to reveal parts which would otherwise behidden;

fig. 2 is the section through I – I in fig. 1;

fig. 3 illustrates a detail of the star wheel viewed from the same standpoint as that of fig. 2, during ejection of a container;

fig. 4 illustrates a detail of the cam control means, viewed in plan;

fig. 5 is a section through part of the cam control means illustrated in fig. 4.

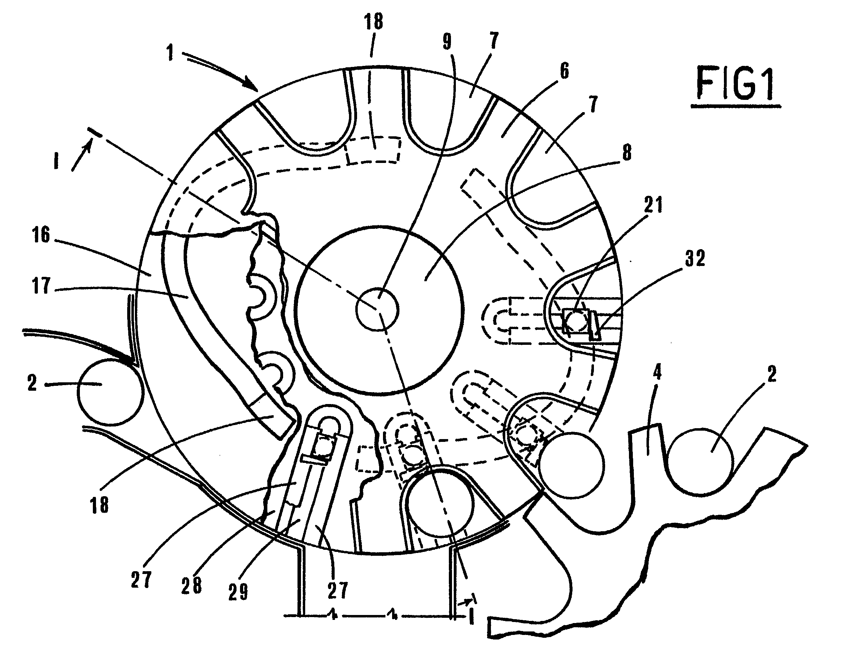

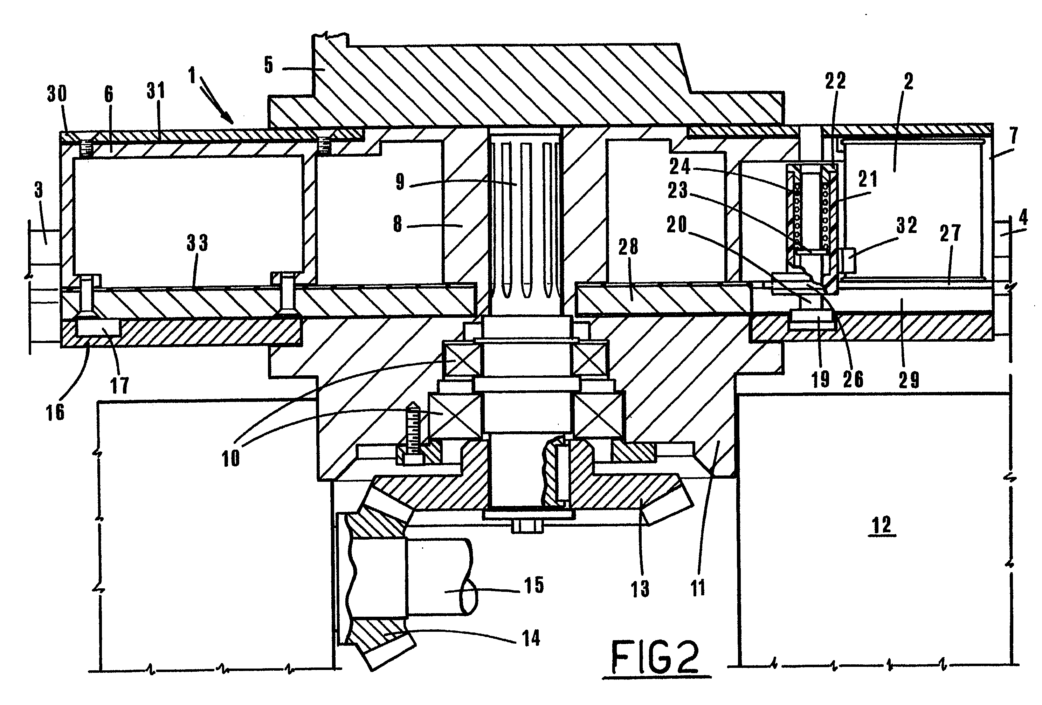

Referring to fig. 1 and 2 of the drawings, 1 denotes a star conveyor wheel suitable for the transfer of cylindrical containers 2 from an infeed conveyor 3, say, a conventional star wheel, to a take-up conveyor 4 which is located internally of a pressure vessel 5; the take-up wheel and the vessel are both of conventional type, and illustrated only in part. Vacuum conditions are maintained internally of the pressure vessel 5, which also accommodates a conventional seam-folding unit (not shown).

The star wheel 1 consists substantially of a hollow cylindrical body 6 in which a plurality of radially disposed recesses 7 are formed, each one opening out onto the cylindrical wall of the body and capable of accommodating a single container 2 totally within its geometrical confines. The wheel is provided with a hub 8 splined to a vertical shaft 9 which turns in bearings 10 seated in a block 11 rigidly attached to the frame of the vacuum pump assembly, denoted 12. Drive is transmitted to the shaft 9 by a bevel gear pair 13 and 14, the pinion of which is keyed to a shaft 15 rotated by a conventional prime mover (not illustrated).

16 denotes a fixed circular plate which is located immediately below the hollow cylindrical body 6, attached to the bearing block 11, and exhibits two contoured channels 17 of rectangular cross section which are alternately distanced from and redirected toward the centre of the plate 16 itself.

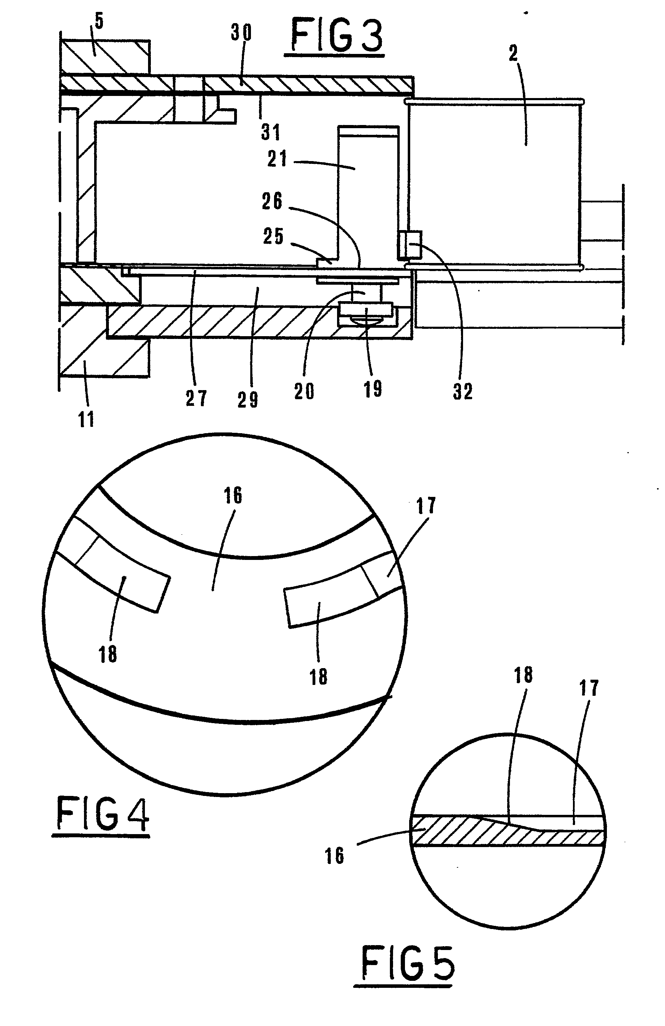

One of the two channels 17 occupies that part of the plate which is 16 positioned inside the pressure vessel 5, whilst the remaining channel occupies the part of the plate located externally of the vessel. 18 denotes a terminal gradient (see figs 4 and 5) providing continuity between the top surface of the plate 16 and the bottom of the contoured channel 17. Accordingly, no passage of air is possible between the two channels, which occupy diametrically opposed positions on the plate either side of the pressure vessel wall, and no loss of negative pressure occurs via the star wheel.

The circular plate 16 and its two contoured channels 17 constitute cam control means, inasmuch as the channels accommodate a plurality of followers 19, the number of which matches the number of recesses 7 provided in the star wheel.

The follower 19 illustrated in figs 2 and 3 appears as a roller, though a ball type of embodiment would be equally suitable; at all events, the follower is freely rotatable about a pivot 20 which in its turn is axially slidable within a bush 21 capped at the top end by a centreless plug 22.

The follower pivot 20 is provided with a shoulder 23 against which to seat a spring 24 which ensheaths the part of the pivot between the shoulder 23 and the plug 22, thereby keeping the follower 19 urged into the channel 17.

25 denotes a shoe 25 integral with the bottom end of each bush 21 and exhibiting two parallel grooves 26, one either side, in which a pair of plates 27 may locate; the plates 27 in question are bolted in position at either side of a radial slot 29 cut into a disc 28 which constitutes the base of the star wheel's hollow cylindrical body 6.

As fig 1 indicates, the recesses 7 and the radial slots 29 are identical in number, and each slot affords access to a relative pivot 20, which must necessarily pass through the disc 28 in order to enable engagement of the relative follower 19 in the channel 17 beneath.

33 denotes a gasket located between the disc 28 and the hollow body 6, which ensures an airtight seal. The top side of the hollow body 6 is closed off in similar fashion by a relative disc 30, a gasket 31 being located between the two.

Also attached to each of the bushes 21, one has a wedge shaped block 32 designed to make contact with the container 2 and thrust it from the recess 7 in the manner described below.

Thus, the bush 21 and the contact block 32 together constitute ejection means by which single containers 2 are pushed clear of the respective recesses 7 both on entry into the pressure vessel, and on exit from the vessel following the seam-folding operation.

The two channels 17 are contoured and positioned in such a way (see fig 1) that during transfer of the containers from the infeed conveyor 3 into the star wheel recesses 7, the ejection means (i.e. bushes 21 and contact blocks 32) occupying the infeed sector of the wheel will be concealed within the hollow body 6, completely clear of the recesses 7.

The star wheel rotates while the circular plate 16 remains stationary, and accordingly, the bushes 21 are obliged to shift radially along the slots 29 as the cam followers 19 are gradually distanced from the centre of the plate, following the trajectory imposed on them by the channels 17.

The single bushes 21 and their contact blocks 32 will be traversed progressively along the slots 29 as the wheel turns, such that the containers 2 are ejected one by one from the recesses 7 and directed into the recesses of the take-up wheel 4, in smooth and regular succession.

This accomplished, the ejection means return to the concealed position, internally of the hollow body, in order to vacate the recesses and allow take-up of the sealed containers on their exit route from the pressure vessel.

It will be remembered that the pivots 20 are mounted slidably in their relative bushes 21; thus, the cam followers 19 can abandon the channel 17 located on one side of the pressure vessel wall, and drop into the channel 17 located on the other, by riding up and down the relative terminal gradients 18.

Embodying the plate 16 with a blank area separating the two sets of gradients, one ensures that no air is allowed into the pressure vessel by way of the channels 17.

**Claims**

1. Star conveyor wheel for the transfer of cylindrical containers (2) into and out of a pressure vessel (5) housing equipment by which the containers are vacuum sealed the star conveyor wheel (1) comprising a drum (6) having two circular end flanges (28, 30) joined together at their centres by a shaft (8) and at their peripheries by arcuate sections, recesses (7) being formed between the peripheral arcuate sections by recessing radially inwardly the flanges (28, 30) between the peripheral arcuate sections, the recesses (7) serving to accommodate the single containers (2), the star wheel being driven rotationally around the shaft axis (8), and further comprising a plurality of ejection means each of which is slidable in the radial direction across a respective recess (7) to an extended position where its outermost end is at the outer periphery of the recess; cam control means having a circular plate (16) fixed to the frame of the container sealing equipment, by which control means each of said ejection means are operated both during entry and during exit of the container (2) into and out of the pressure vessel (5); characterized in that in its radially innermost position the ejection means is located radially inwards of the recess; and in that each of the ejection means comprises a bush (21) which is slidable along a radial slot (29) located in the bottom face of the hollow body and coinciding with the recess, and accommodates the axially slidable pivot (20) of a spring-loaded cam follower (19) urged into contact with the cam control means; and in that the cam control plate (16) exhibits two contoured channels (17) of rectangular cross section which are alternately distanced from and redirected toward the centre of the plate (16) and occupy diametrically opposed positions thereon, one located inside the pressure vessel (5) and the other outside, and wherein the two contoured channels (17) are engaged by the spring-loaded cam followers (19) of the ejection means and wherein each of the contoured channels (17) exhibits two terminal gradients (18) providing continuity between the top surface of the plate (16) and the bottom of the channel, the top surface of the plate (16) being directly adjacent the lower end flange (28) so as to permit no intercommunication between the said channels (17).

2. The apparatus according to claim 1 characterized in that each of the ejection means has a contact block (32) attached at its radially outward end.

## Patentansprüche

1. Sternförderrad zum Überbringen von zylindrischen Behältern (2) in eine und aus einer Druckfassanlage (5), mit welcher die Behälter unter Vakuum versiegelt werden, wobei das Sternförderrad (1) wie folgt enthält: Eine Trommel (6) mit zwei kreisförmigen Endflanschen (28, 30), die ihren Mitten durch eine Welle (8) miteinander verbunden sind und an ihrem umlaufenden Rand durch gebogene Abschnitte, wobei zwischen den umlaufenden gebogenen Abschnitten Vertiefungen (7) eingearbeitet sind, und zwar zwischen den umlaufenden gebogenen Abschnitten radial zum Inneren der Flansche (28, 30) gerichtet, welche Vertiefungen (7) zur Aufnahme der einzelnen Behälter (2) dienen, während das Sternförderrad rund um die Wellenachse (8) gedreht wird, und wobei es weiter eine Anzahl von Ausstossmitteln enthält, von denen jedes in radialer Richtung durch eine entsprechende Vertiefung (7) hindurch gleitbar ist bis zu einer ausgefahrenen Position, in welcher sich das äussere Ende ausserhalb der Peripherie der Vertiefung befindet; Nockensteuermittel mit einem kreisförmigen Teller (16), der an dem Rahmen der Behälterversiegelungsanlage befestigt ist, durch welche jedes der genannten Ausstossmittel, sei es während des Eintritts in wie auch während des Austritts des Behälters (2) in und aus der Druckfassanlage (5) in Betrieb gesetzt wird; dadurch gekennzeichnet, dass die Ausstossmittel in ihrer radial zuiinnerst liegenden Position radial innerhalb der Vertiefung angeordnet sind; und dadurch, dass jedes der Ausstossmittel ein Futter (21) enthält, das entlang radialer Schlitze (29) gleitbar ist, die in der Bodenfläche des Hohlkörpers angeordnet sind und mit der Vertiefungen übereinstimmen, und dass es einen axial gleitbaren Zapfen (20) einer federgespannten Nockenrolle (19) aufnimmt, die gegen die Nockensteuermittel gedrückt wird; und dadurch, dass der Nockenteller (16) zwei profilierte Kanäle (17) mit rechteckigem Querschnitt aufweist, die sich wechselweise von der Mitte des Tellers (16) entfernen und auf diese zulaufen und auf diesem diametral entgegengesetzte Positionen einnehmen, und zwar eine innerhalb der Druckfassanlage (5) und die andere ausserhalb derselben, und dass sich in die beiden profilierten Kanäle (17) die federgespannten Nockenrollen (19) der Ausstossmittel einschieben, und dass jeder der profilierten Kanäle (17) zwei Endstufen (18) aufweist, die eine Kontinuität zwischen der oberen Fläche des Tellers (16) und dem Boden des Kanals darstellen, wobei die obere Fläche des Tellers (16) direkt an den unteren Endflansch (28) angrenzt, so dass eine Verbindung zwischen den genannten Kanälen (17) möglich ist.

2. Vorrichtung nach Patentanspruch 1, dadurch gekennzeichnet, dass jedes der Ausstossmittel über einen Kontaktblock (32) verfügt, der an seinem radialen äusseren Ende befestigt ist.

## Revendications

1. Roue convoyeuse à étoile pour le transfert de récipients cylindriques (2) dans et hors d'un équipement à chambre (5) sous pression avec lequel les récipients sont scellés sous vide, la roue convoyeuse à étoile (1) comportant un tambour (6) ayant deux brides circulaires d'extrémité (28, 30) unies ensemble, au centre, par un arbre (8) et, sur leurs pourtours, par des sections arquées, des cavités (7) étant formées entre les sections arquées périphériques en pratiquant des renfoncements radiaux vers l'intérieur des brides (28, 30) entre les sections arquées périphériques, les cavités (7) étant destinées à loger chaque récipient individuel (2), la roue à étoile étant entraînée en rotation autour de l'axe de l'arbre (8), et comportant en outre un pluralité de moyens d'éjection chacun desquels est coulissant en direction radiale à travers une cavité (7) respective jusqu'à une position étendue où son extrémité la plus extérieure se trouve à la périphérie extérieure de la cavité; des moyens de contrôle à came étant prévus, lesquels ont une plaque circulaire (16) fixée au bâti de l'équipement de scellage du récipient, par ces moyens de contrôle étant mis en mouvement chacun desdits moyens d'éjection tant pendant l'entrée que pendant la sortie du résipient (2) respectivement dans et hors de la chambre sous pression (5); caractérisée en ce que dans leur position radialement profonde les moyens d'éjection sont placés radialement vers l'intérieur de la cavité; et en ce que chacun des moyens d'éjection comporte une bague (21) qui est coulissante le long d'une fente radiale (29) située sur la face inférieure du corps creux et coïncidant avec la cavité et loge le pivot (20) axialement coulissant d'un rouleau de came (19) chargé élastiquement et pressé en contact avec les moyens de contrôle de la came; et en ce que la plaque (16) de contrôle de la came présente deux canaux (17) convenablement conformés de section rectangulaire qui sont alternativement éloignés de et dirigés de nouveau vers le centre de la plaque (16) et qui occupent sur celle-ci des positions diamétralement opposées, dont l'une se trouve à l'intérieur de la chambre sous pression (5) et l'autre à l'extérieur et où les deux canaux conformés (17) sont engagés par les rouleaux de came (19) chargés élastiquement des moyens d'éjection et où chaque canal conformé (17) présente de pentes finales (18) fournissant la continuité entre la surface supérieure de la plaque (16) et le fond du canal, la surface supérieure de la plaque (16) étant directement adjacente à la bride d'extrémité inférieure (28), de manière à ne permettre aucune communication entre lesdits canaux (17).

2. Dispositif selon la revendication 1, caractérisé en ce que chacun des moyens d'éjection a un élément de poussée (32) attaché à son extrémité s'étendant radialement vers l'extérieur.

FIG1

EP 0 228 351 B1

FIG2

EP 0 228 351 B1

FIG 3

FIG 4

FIG 5